# EUROPÄISCHE PATENTANMELDUNG

(11) **EP 3 823 235 A1**
(43) Veröffentlichungstag der Anmeldung: **19.05.2021**
(21) Anmeldenummer: 19209155.1
(22) Anmeldetag: 14.11.2019
(51) Int. Cl.: H04L 29/06

(54) **VERBINDUNGSSPEZIFISCH GEPRÜFTE DATENÜBERTRAGUNG ÜBER EINE KRYPTOGRAPHISCH AUTHENTISIERTE NETZWERKVERBINDUNG**

(71) Anmelder: Siemens Aktiengesellschaft, 80333 München (DE)
(72) Erfinder: Falk, Rainer, 85586 Poing (DE)

(57) **Zusammenfassung**

Die Erfindung ist auf ein computerimplementiertes Verfahren und ein Überprüfungsmodul (10, 10', 10") zum Zulassen einer kryptographisch authentisierten Netzwerkverbindung zwischen einer Sendeeinheit (100) und einer Empfangseinheit (200a, 200b) gerichtet. Es wird eine Netzwerkverbindung (aC1, aC2) zwischen der Sendeeinheit (100) und der Empfangseinheit (200a, 200b) aufgebaut, wobei die Sendeeinheit für die Netzwerkverbindung mittels einer Authentisierungsinformation kryptographisch authentisiert wird, und eine verbindungsspezifische Referenzinformation bereitgestellt. Anhand der verbindungsspezifischen Referenzinformation wird ein von der Sendeeinheit (100) über die kryptographisch authentisierte Netzwerkverbindung (aC1, aC2) übermittelten Datenverkehrs überprüft und die kryptographisch authentisierten Netzwerkverbindung (aC1, aC2) wird zugelassen, wenn der Datenverkehr zumindest teilweise mit der verbindungsspezifischen Referenzinformation übereinstimmt.

## Beschreibung

Die Erfindung betrifft ein computerimplementiertes Verfahren und ein Überprüfungsmodul zum Zulassen einer kryptographisch authentisierten Netzwerkverbindung zwischen einer Sendeeinheit und einer Empfangseinheit. Weiter ist die Erfindung auf eine Sendeeinheit, welche ein solches Überprüfungsmodul umfasst, und ein System, welches eine Sendeeinheit und ein solches Überprüfungsmodul umfasst, und auf ein Computerprogrammprodukt gerichtet.

Die Authentisierung von Nutzern ist eine grundlegende Sicherheitsanforderung für eine Netzwerkverbindung zwischen einer Sendeeinheit und einer Empfangseinheit, wobei sowohl menschliche Nutzer als auch Geräte und/oder auf Geräten ausgeführte Softwareprozesse als Nutzer verstanden werden können. Die Authentisierung von Geräten und Prozessen erfolgt in der Regel durch eine kryptografische Authentisierung beim Aufbau der Verbindung und kann nach einer vorgegebenen Zeitdauer erneut durchgeführt werden. Zusätzlich kann ein sogenannter Fingerabdruck eines Geräts (engl. "Fingerprinting") ermittelt und geprüft werden, wobei ein ausgehender Netzwerkverkehr eines Geräts analysiert wird, um das Gerät anhand des charakteristischen Netzwerkwerkverkehrs zu identifizieren.

Es ist eine Aufgabe der vorliegenden Erfindung, die Authentisierung von Geräten und/oder Softwareprozessen zu verbessern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum Zulassen einer kryptographisch authentisierten Netzwerkverbindung zwischen einer Sendeeinheit und einer Empfangseinheit, umfassend die Schritte:
- Aufbauen einer Netzwerkverbindung zwischen der Sendeeinheit und der Empfangseinheit, wobei die Sendeeinheit für die Netzwerkverbindung mittels einer Authentisierungsinformation kryptographisch authentisiert wird,
- Bereitstellen einer verbindungsspezifischen Referenzinformation,
- Überprüfen eines von der Sendeeinheit über die kryptographisch authentisierte Netzwerkverbindung übermittelten Datenverkehrs anhand der verbindungsspezifischen Referenzinformation,
- Zulassen der kryptographisch authentisierten Netzwerkverbindung, wenn der Datenverkehr zumindest teilweise mit der verbindungsspezifischen Referenzinformation übereinstimmt.

Es ist ein Vorteil der vorliegenden Erfindung, dass eine kryptographisch authentisierte Netzwerkverbindung verwendet werden kann, wenn ein darüber übermittelter Datenverkehr mit der zugeordneten Referenzinformation übereinstimmt. Es kann insbesondere geprüft werden, ob der Datenverkehr innerhalb eines vorgegebenen Toleranzbereichs mit der verbindungsspezifischen Referenzinformation übereinstimmt. In anderen Worten, anhand des Datenverkehrs, der nach dem Aufbau der kryptographisch authentisierten Netzwerkverbindung über diese übermittelt wird, wird geprüft, ob die Netzwerkverbindung zulässig ist. Dies erhöht weiter insbesondere die Sicherheit einer Geräteauthentisierung. Es kann lediglich Datenverkehr, der mit der verbindungsspezifischen Referenzinformation übereinstimmt, zugelassen werden. Unter verbindungsspezifischer Referenzinformation kann beispielsweise ein verbindungsspezifischer Fingerabdruck verstanden werden. Unter "verbindungsspezifisch" kann insbesondere im Zusammenhang mit der Erfindung eine Zuordnung zur jeweiligen Netzwerkverbindung verstanden werden. Beispielsweise kann einer jeweiligen Netzwerkverbindung eine jeweilige Referenzinformation zugeordnet werden. Für die kryptographische Authentisierung einer Netzwerkverbindung kann als Authentisierungsinformation beispielsweise ein digitales Zertifikat oder ein kryptographischer Schlüssel, z.B. ein Pre-Shared Key, ein Session Resumption Ticket oder ein Kerberos Ticket verwendet werden. Die Authentisierung kann beispielsweise durch ein Authentisierung- und Schlüsselvereinbarung bei einem Transport Layer Security (TLS) Protokoll oder einem IKEv2 (IKE: Internet Key Exchange Protokoll) erfolgen. Weiterhin ist es möglich, als Authentisierungsinformation ein Security-Token, insbesondere ein JSON Web Token (JSON: JavaScript Object Notation) kryptographisch geschützt zu übertragen.

Die verbindungsspezifische Referenzinformation kann insbesondere statistische Parameter des zulässigen Netzwerkverkehrs beschreiben, z.B. statistische Parameter der Sendezeitpunkte bzw. dem zeitlichen Abstand zwischen zwei Datenpaketen und/oder die Länge von Datenpaketen. Statistische Parameter sind beispielweise ein Mittelwert (arithmetisches, geometrisches, harmonisches Mittel), eine Standardabweichung, eine Varianz, ein Minimumwert, ein Maximumwert oder eine Schiefe. Auch ist es möglich, die Übereinstimmung mit einer erwarteten Verteilungsfunktion zu prüfen. Dazu können beispielsweise Mustererkennungsverfahren eingesetzt werden. Weiterhin ist es möglich, dass die Referenzinformation zulässige Datenformate spezifiziert, z.B. JPG, PDF, DOCX etc.. Auch ist es möglich, dass die Referenzinformation zulässige Datenformate durch einen regulären Ausdruck (engl. regular expression) definiert.

In einer Ausführungsform kann der über die kryptographisch authentisierte Netzwerkverbindung übermittelte Datenverkehr überprüft werden solange die kryptographisch authentisierte Netzwerkverbindung aufgebaut ist.

Damit kann beispielsweise während der Übermittlung unzulässiger Datenverkehr ermittelt und entsprechend die Netzwerkverbindung nicht zugelassen werden.

In einer Ausführungsform kann der über die kryptographisch authentisierte Netzwerkverbindung übermittelte Datenverkehr nach oder bei einer Unterbrechung oder Beendigung der Netzwerkverbindung überprüft werden.

Dies erlaubt beispielsweise übermittelte Daten, wenn der übermittelte Datenverkehr nicht mit der verbindungsspezifischen Referenzinformation übereinstimmt, nach der Übermittlung zumindest teilweise zu löschen. Weiterhin ist es möglich, eine Transaktion in einer Datenbank, die abhängig von dem übermittelten Datenverkehr generiert wurde, zu bestätigen (commit), wenn der übermittelte Datenverkehr übereinstimmt, und andernfalls diese rückabzuwickeln (Roll-back).

In einer Ausführungsform kann, wenn der Datenverkehr von der verbindungsspezifischen Referenzinformation abweicht, mindestens einer der folgenden Schritte durchgeführt werden:
- Unterbrechen oder Beenden der kryptographisch authentisierten Netzwerkverbindung,
- Unterbrechen oder Beenden einer weiteren, von der Sendeeinheit ausgehenden Netzwerkverbindung,
- Wiederholen der kryptographischen Authentisierung der Sendeeinheit,
- Speichern des Prüfergebnisses der Überprüfung des Datenverkehrs,
- Löschen von Konfigurationsdaten der Sendeeinheit,
- Löschen einer Authentifizierungsinformation, die der Authentisierungsinformation der Sendeeinheit zugeordnet ist,
- Zurücksetzen einer Datenbank-Transaktion
   und/oder
- Durchführen eines Neustarts der Sendeeinheit.

Dies erlaubt insbesondere die kryptographisch authentisierte Netzwerkverbindung lediglich für einen zulässigen Datenverkehr zuzulassen.

In einer Ausführungsform kann die verbindungsspezifische Referenzinformation abhängig von der Authentisierungsinformation der Sendeeinheit und/oder von einer Identifikationsinformation der Sendeeinheit und/oder von einer verbindungsspezifischen Portnummer und/oder von einem verbindungsspezifischen Protokoll und/oder von einer Authentisierungsinformation der Empfangseinheit ermittelt werden.

In einer Ausführungsform kann die verbindungsspezifische Referenzinformation aus einer bereitgestellten Vielzahl von Referenzinformationen für die Sendeeinheit in Abhängigkeit von der Authentisierungsinformation der Sendeeinheit und/oder von der Identifikationsinformation der Sendeeinheit und/oder von der verbindungsspezifischen Portnummer und/oder von dem verbindungsspezifischen Protokoll selektiert werden.

In einer Ausführungsform kann die verbindungsspezifische Referenzinformation beim Verbindungsaufbau an die Empfangseinheit übermittelt werden.

Dies ermöglicht beispielsweise eine Überprüfung des Datenverkehrs anhand der Referenzinformation durch die Empfangseinheit.

In einer Ausführungsform kann die Authentisierungsinformation der Sendeeinheit die verbindungsspezifische Referenzinformation umfassen.

Auf diese Weise kann die Authentisierungsinformation verbindungsspezifisch eingerichtet werden. Außerdem kann derart beim Aufbau der Netzwerkverbindung die Authentisierungsinformation zusammen mit der verbindungsspezifischen Referenzinformation übermittelt werden. Die Referenzinformation kann beispielsweise explizit eincodiert sein oder die explizit codierte Referenzinformation kann referenziert werden, z.B. durch Angabe einer URL (URL: uniform resource locator) oder einer URI (URI: uniform resource identifier).

In einer Ausführungsform kann die Überprüfung des Datenverkehrs durch ein Überprüfungsmodul durchgeführt werden, wobei das Überprüfungsmodul der Sendeeinheit oder der Empfangseinheit zugeordnet oder separat, zwischen der Sendeeinheit und der Empfangseinheit, angeordnet ist.

In einer Ausführungsform kann die Überprüfung des Datenverkehrs anhand der verbindungsspezifischen Referenzinformation kontinuierlich oder zu vorgegebenen Zeitpunkten erfolgen.

Gemäß einem zweiten Aspekt betrifft die Erfindung ein Überprüfungsmodul zum Zulassen einer kryptographisch authentisierten Netzwerkverbindung zwischen einer Sendeeinheit und einer Empfangseinheit, wobei das Überprüfungsmodul derart eingerichtet ist, einen von der Sendeeinheit über die kryptographisch authentisierte Netzwerkverbindung übermittelten Datenverkehr anhand einer bereitgestellten, verbindungsspezifischen Referenzinformation zu überprüfen und die kryptographisch authentisierte Netzwerkverbindung zuzulassen, wenn der Datenverkehr mit der verbindungsspezifischen Referenzinformation zumindest teilweise übereinstimmt.

Gemäß einem weiteren Aspekt betrifft die Erfindung eine Sendeeinheit zum Zulassen einer kryptographisch authentisierten Netzwerkverbindung zu einer Empfangseinheit, umfassend:
- eine Schnittstelle, die derart eingerichtet ist, eine Netzwerkverbindung zwischen der Sendeeinheit und der Empfangseinheit aufzubauen, wobei die Sendeeinheit für die Netzwerkverbindung mittels einer Authentisierungsinformation kryptographisch authentisiert ist,
- Bereitstellungsmodul, das derart eingerichtet ist, eine verbindungsspezifische Referenzinformation bereitzustellen, und
- ein erfindungsgemäßes Überprüfungsmodul.

Das Überprüfungsmodul kann insbesondere als unabhängige Software- und/oder Hardwarekomponente ausgestaltet sein. Das Überprüfungsmodul kann beispielsweise der Sendeeinheit, einem Filtermodul, wie z.B. einer Firewall, oder der Empfangseinheit zugeordnet sein.

Gemäß einem weiteren Aspekt betrifft die Erfindung ein System zum Zulassen einer kryptographisch authentisierten Netzwerkverbindung zwischen einer Sendeeinheit und einer Empfangseinheit, umfassend:
- die Sendeeinheit, die eine Schnittstelle, die derart eingerichtet ist, eine Netzwerkverbindung zwischen der Sendeeinheit und der Empfangseinheit aufzubauen, wobei die Sendeeinheit für die Netzwerkverbindung mittels einer Authentisierungsinformation kryptographisch authentisiert ist, und ein Bereitstellungsmodul, das derart eingerichtet ist, eine verbindungsspezifische Referenzinformation bereitzustellen, umfasst,
- die Empfangseinheit, die derart eingerichtet ist, einen Datenverkehr über die kryptographisch authentisierte Netzwerkverbindung zu empfangen,
   und
- ein erfindungsgemäßes Überprüfungsmodul, wobei das Überprüfungsmodul der Sendeeinheit oder der Empfangseinheit zugeordnet oder separat, zwischen der Sendeeinheit und der Empfangseinheit angeordnet ist.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens, des erfindungsgemäßen Überprüfungsmoduls, der erfindungsgemäßen Sendeeinheit und des erfindungsgemäßen Systems sind in den Zeichnungen beispielhaft dargestellt und werden anhand der nachfolgenden Beschreibung näher erläutert. Es zeigen:
- Fig. 1: eine beispielhafte Ausführungsform eines erfindungsgemäßen Verfahrens als Ablaufdiagramm;
- Fig. 2: ein Ausführungsbeispiel einer erfindungsgemäßen Sendeeinheit und eines erfindungsgemäßen Überprüfungsmoduls in schematischer Blockdarstellung; und
- Fig. 3: ein Ausführungsbeispiel eines erfindungsgemäßen Systems in schematischer Blockdarstellung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

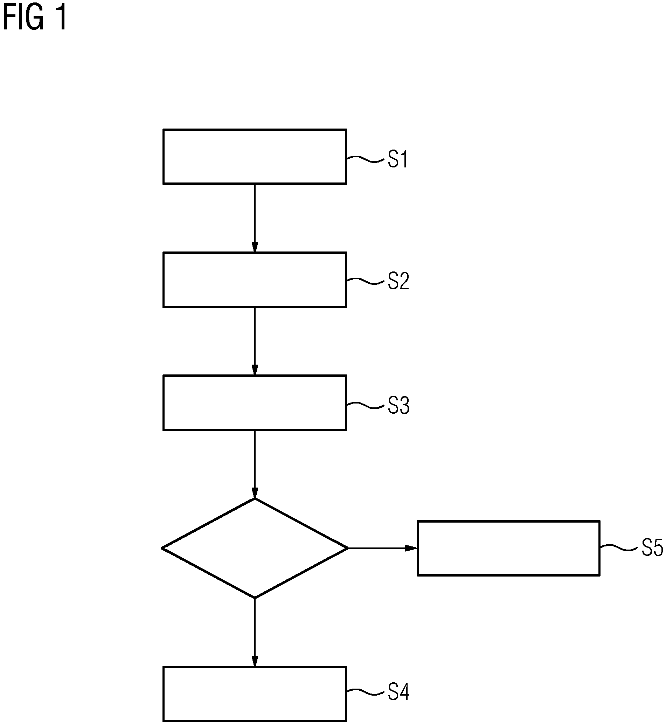

Figur 1 zeigt ein Ablaufdiagramm einer beispielhaften Ausführungsform des computergestützten Verfahrens zum Zulassen und/oder Verhindern einer kryptographisch authentisierten Netzwerkverbindung zwischen einer Sendeeinheit und einer Empfangseinheit.

Die Sendeeinheit und die Empfangseinheit können jeweils beispielsweise ein IoT-Gerät (Internet of Things, kurz: IoT), ein Steuergerät oder ein Software-Prozess auf einem Gerät sein und sind über ein Netzwerk, beispielsweise ein Automatisierungsnetzwerk, miteinander drahtlos oder drahtgebunden gekoppelt.

Im Schritt S1 wird eine kryptographisch authentisierte Netzwerkverbindung aufgebaut. Dabei authentisiert sich die Empfangseinheit mittels einer Authentisierungsinformation. Eine Authentisierungsinformation kann beispielsweise ein kryptographischer Schlüssel, ein digitales Zertifikat oder ein Authentisierungstoken sein. Über die aufgebaute Netzwerkverbindung können Daten, z.B. Steuerdaten oder Diagnosedaten, übermittelt werden. Die Netzwerkverbindung kann insbesondere bidirektional sein, d.h. die Sendeeinheit kann sowohl Daten übermitteln als auch empfangen.

Im nächsten Schritt S2 wird eine verbindungsspezifische Referenzinformation bereitgestellt. Beispielsweise ist diese auf einer Speichereinheit gespeichert und wird von dort empfangen. Die verbindungsspezifische Referenzinformation kann insbesondere abhängig von der Authentisierungsinformation der Sendeeinheit und/oder von einer Identifikationsinformation der Sendeeinheit, wie z.B. MAC- oder IP-Adresse, und/oder von einer verbindungsspezifischen Portnummer und/oder von einem verbindungsspezifischen Protokoll, wie z.B. einem Applikationsprotokoll wie OPC UA, und/oder von einer Authentisierungsinformation der Empfangseinheit ermittelt werden. Alternativ kann die verbindungsspezifische Referenzinformation aus einer Vielzahl von bereitgestellten Referenzinformationen, die der Sendeeinheit zugeordnet sind, selektiert werden. Die Selektion kann beispielsweise in Abhängigkeit von der Authentisierungsinformation der Sendeeinheit und/oder von der Identifikationsinformation der Sendeeinheit und/oder von der verbindungsspezifischen Portnummer und/oder von dem verbindungsspezifischen Protokoll erfolgen.

Die verbindungsspezifische Referenzinformation kann beispielsweise beim Verbindungsaufbau übermittelt werden. Ein Gerät kann damit spezifizieren, welchen Fingerabdruck bzw. Eigenschaften ein Datenverkehr aufweisen wird. Beispielsweise kann beim Verbindungsaufbau im Rahmen einer Authentisierung und Schlüsselvereinbarung, eine Referenzinformation übertragen werden, die den Verbindungsfingerabdruck des Datenverkehrs spezifiziert. Wird die Sendeeinheit beispielsweise manipuliert, so dass ein veränderter Datenverkehr über die kryptographisch authentisierte Netzwerkverbindung übermittelt wird, kann dies bei einer Prüfung des Datenverkehrs anhand der Referenzinformation erkannt und verhindert werden.

Die verbindungsspezifischen Referenzinformation kann außerdem beispielsweise Teil der Authentisierungsinformation der Empfangseinheit sein, so dass die Authentisierungsinformation verbindungsspezifisch eingerichtet wird.

Im nächsten Schritt S3 wird der Datenverkehr, der über die kryptographisch authentisierte Netzwerkverbindung an die Empfangseinheit übermittelt wird, anhand der verbindungsspezifischen Referenzinformation geprüft. Dabei wird ermittelt, ob der Datenverkehr bzw. Eigenschaften des Datenverkehrs, wie z.B. Art der übertragenen Daten, mit der verbindungsspezifischen Referenzinformation zumindest teilweise übereinstimmt. Beispielsweise kann die verbindungsspezifische Referenzinformation mindestens ein Kriterium umfassen, wobei geprüft wird, ob der Datenverkehr das Kriterium erfüllt.

Die Überprüfung kann insbesondere durchgeführt werden solange die kryptographisch authentisierte Netzwerkverbindung aufgebaut ist. Alternativ oder zusätzlich kann der übermittelte Datenverkehr nach einer Unterbrechung oder Beendigung der Netzwerkverbindung überprüft werden. Dies ermöglicht beispielsweise bereits übermittelten Datenverkehr empfängerseitig zu löschen, wenn der Datenverkehr nicht mit der Referenzinformation übereinstimmt. Außerdem kann die Überprüfung kontinuierlich bzw. fortlaufend oder zu vorgegebenen Zeitpunkten durchgeführt werden.

Wenn der Datenverkehr in einem vorgegebenen Toleranzbereich mit der verbindungsspezifischen Referenzinformation übereinstimmt, wird im Schritt S4 die kryptographisch authentisierte Netzwerkverbindung zugelassen.

Wenn die Überprüfung ergibt, dass der Datenverkehr von der verbindungsspezifischen Referenzinformation abweicht, Schritt S5, wird die Abweichung geloggt und die kryptographisch authentisierte Netzwerkverbindung kann nicht zugelassen werden. In anderen Worten, die kryptographisch authentisierte Netzwerkverbindung wird verhindert, oder blockiert. Dabei kann insbesondere einer der folgenden Schritte durchgeführt werden:
- Unterbrechen oder Beenden der kryptographisch authentisierten Netzwerkverbindung,
- Unterbrechen oder Beenden einer weiteren, von der Sendeeinheit ausgehenden Netzwerkverbindung,
- Wiederholen der kryptographischen Authentisierung der Sendeeinheit und/oder z.B. eine erneute Schlüsselvereinbarung,
- Speichern des Prüfergebnisses der Überprüfung des Datenverkehrs, wie z.B. als Log-Eintrag,
- Löschen von Konfigurationsdaten der Sendeeinheit,
- Löschen einer Authentifizierungsinformation, die der Authentisierungsinformation der Sendeeinheit zugeordnet ist, wie z.B. Löschen einer Registrierung der Sendeeinheit bei einem Backend-Dienst,
- Zurücksetzen bzw. Durchführen eines Roll-Backs einer Datenbank-Transaktion
   und/oder
- Durchführen eines Neustarts der Sendeeinheit.

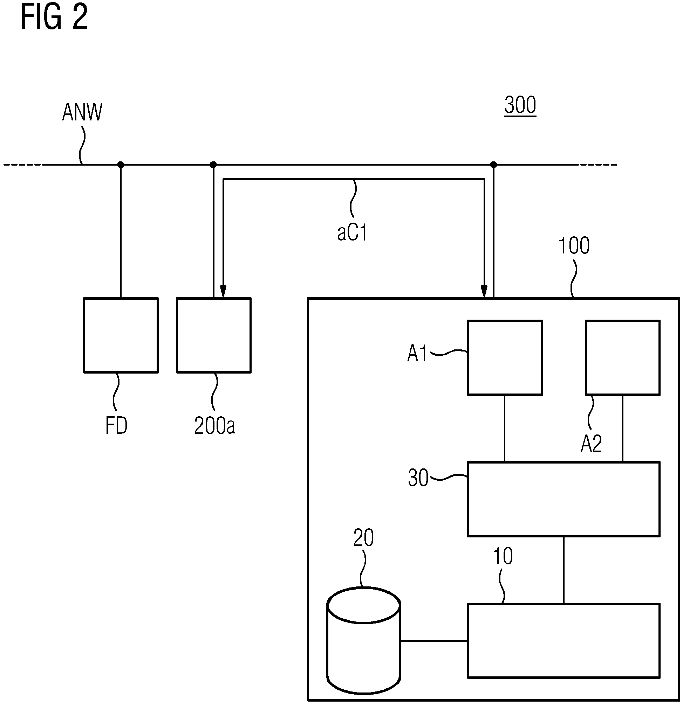

Figur 2 zeigt in schematischer Darstellung ein erfindungsgemäßes System 300, das eine erfindungsgemäße Sendeeinheit 100 und eine erfindungsgemäße Empfangseinheit 200a umfasst. Die Sendeeinheit 100 und die Empfangseinheit 200a sind beispielsweise Geräte oder jeweils Teile eines Geräts eines Automatisierungsnetzwerks ANW, welches weitere Feldgeräte FD umfassen kann. Die Sendeeinheit 100 kann beispielsweise ein Steuergerät sein, welches innerhalb des Automatisierungsnetzwerks ANW zu einer Empfangseinheit 200a, z.B. einem Feldgerät, eine kryptographisch authentisierte Netzwerkverbindung aC1 aufbaut. Dazu nutzt die Sendeeinheit 100 eine Authentisierungsinformation, wie z.B. ein Gerätezertifikat. Es können beispielsweise unterschiedliche Authentisierungsinformationen für unterschiedliche Netzwerkverbindungen genutzt werden.
Diese können auch als Geräte-Prozess-Authentisierungscredential oder Geräte-Applikations-Authentisierungscredential bezeichnet werden. Insbesondere können durch diese Authentisierungscredentials unterschiedliche Applikationen A1, A2 der Sendeeinheit 100 authentisiert werden. Außerdem authentifiziert das Steuergerät den Kommunikationspartner, d.h. die Empfangseinheit 200a.

Über die kryptographisch authentisierte Netzwerkverbindung aC1 können beispielsweise Steuerdaten zur Überwachung und/oder Steuerung eines technischen Systems (nicht dargestellt) oder Diagnosedaten übertragen werden. Ein technisches System ist zum Beispiel eine prozesstechnische Anlage, eine Werkzeugmaschine, ein Teil eines Energieverteilnetzes oder ein Bahnsicherungssystem.

Die Sendeeinheit 100 umfasst eine Bereitstellungseinheit 20, die derart eingerichtet ist, eine verbindungsspezifische Referenzinformation bereitzustellen. Beispielsweise wird abhängig von dem vom Steuergerät verwendeten Authentisierungs-Credential und/oder dem von der Empfangseinheit 200a verwendeten Authentisierungs-Credential und/oder abhängig von weiteren Informationen, wie Protokoll, Portnummer, eine verbindungsspezifische Referenzinformation selektiert und bereitgestellt.

Die Sendeeinheit 100 umfasst weiter ein Überprüfungsmodul 10. Das Überprüfungsmodul 10 kann als Software- und/oder Hardware-Komponente realisiert werden. Das Überprüfungsmodul 10 überwacht mittels der bereitgestellten verbindungsspezifischen Referenzinformation den Datenverkehr, der über die kryptographisch authentisierte Netzwerkverbindung aC1 übertragen wird. Dabei wird geprüft, ob der Datenverkehr mit der bereitgestellten Referenzinformation übereinstimmt. Der Datenverkehr kann dabei insbesondere bidirektional sein, d.h. sowohl von der Sendeeinheit 100 an die Empfangseinheit 200a gesendet als auch von dieser empfangen werden. So kann der Datenverkehr beispielsweise auch anhand einer richtungsabhängigen Referenzinformation geprüft werden, d.h. dass lediglich der jeweilige Datenverkehr der entsprechenden Kommunikationsrichtung überprüft wird.

Wenn der übermittelte Datenverkehr nicht mit der Referenzinformation übereinstimmt, kann beispielsweise eine Warnmeldung generiert und ausgegeben, die Netzwerkverbindung aC1 abgebrochen oder eine erneute kryptographische Authentisierung durchgeführt werden.

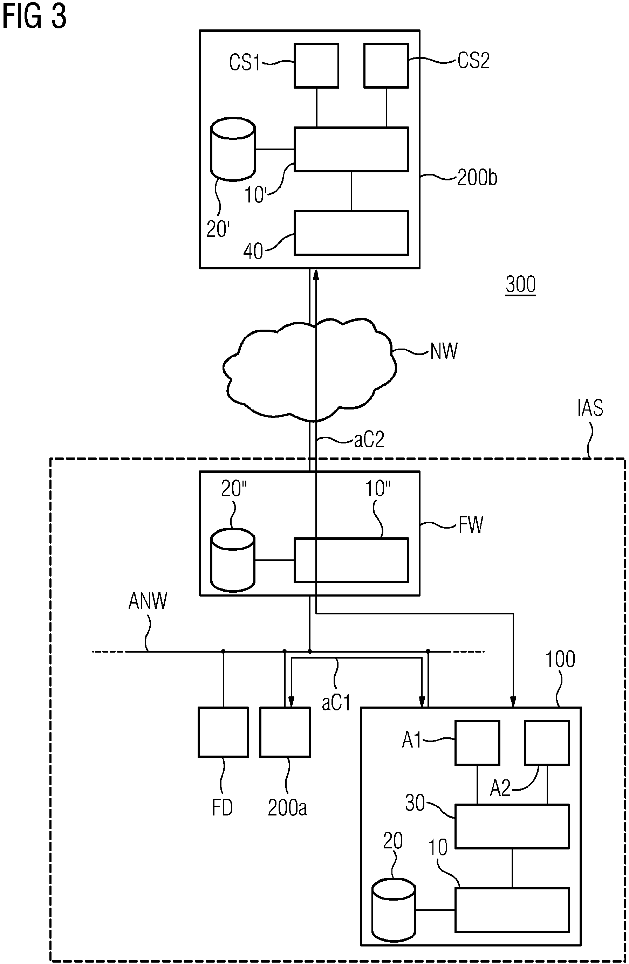

Figur 3 zeigt ein weiteres Ausführungsbeispiel in schematischer Blockdarstellung eines erfindungsgemäßen Systems 300. Das System 300 umfasst ein industrielles Automatisierungssystem IAS, welches über ein offenes Netzwerk NW, z.B. das Internet, mit einem Cloud-Backend 200b verbunden ist. Das Automatisierungssystem IAS umfasst weiter ein Automatisierungsnetzwerk ANW, über welches Feldgeräte FD, 200a und eine Sendeeinheit 100 miteinander gekoppelt sind. Eine Firewall FW kann derart eingerichtet sein, einen Datenverkehr zwischen dem industriellen Automatisierungssystem IAS und dem offenen Netzwerk NW gemäß vorgegebenen Filterregeln zu filtern.

Die Sendeeinheit 100 kann beispielsweise ein Feldgerät des industriellen Automatisierungssystems IAS sein. Die Sendeeinheit 100 kann beispielsweise kryptographisch authentisierte Netzwerkverbindungen aC1, aC2 mit einem Gerät 200a des Automatisierungssystems IAS und/oder mit dem Cloud-Backend 200b aufbauen, um Daten auszutauschen.

Der über eine solche kryptographisch authentisierte Netzwerkverbindung aC1, aC2 übermittelte Datenverkehr kann anhand einer verbindungsspezifischen Referenzinformation geprüft werden. Wenn der Datenverkehr zumindest teilweise mit der verbindungsspezifischen Referenzinformation übereinstimmt, wird die entsprechende Netzwerkverbindung aC1, aC2 zugelassen. Die verbindungsspezifische Überprüfung kann im dargestellten Beispiel an verschiedenen Stellen erfolgen: auf der Sendeeinheit 100, auf der Firewall FW und/oder im Cloud-Backend 200b. Die Überprüfung kann entweder an lediglich einer Stelle und/oder an mehreren dieser Stellen durchgeführt werden. Die Überprüfung erfolgt durch ein Überprüfungsmodul 10 der Sendeeinheit 100, ein Überprüfungsmodul 10" der Firewall FW und/oder ein Überprüfungsmodul 10' des Cloud-Backends 200b. In Abhängigkeit von der Überprüfung des jeweiligen Datenverkehrs anhand der jeweiligen verbindungsspezifischen Referenzinformation können die kryptographisch authentisierten Netzwerkverbindungen aC1, aC2 zugelassen oder unterbunden werden.

Beispielsweise baut eine Schnittstelle 30, z.B. ein TLS Client, der Sendeeinheit 100 für eine der Applikationen A1, A2 eine kryptographisch authentisierte Netzwerkverbindung aC2 mit einer Schnittstelle 40 des Cloud-Backends auf. Beispielsweise wird die Netzwerkverbindung aC2 zum Cloud-Backend 200b aufgebaut, um auf Cloud-Services CS1, CS2 zugreifen zu können. Der übertragene Datenverkehr kann anhand einer durch ein Bereitstellungsmodul 20 bereitgestellten verbindungsspezifischen Referenzinformation durch das Überprüfungsmodul 10 der Sendeeinheit 100 geprüft werden. Zusätzlich oder alternativ kann der Datenverkehr empfängerseitig auf dem Cloud-Backend 200b durch das Überprüfungsmodul 10' überprüft werden. Die verbindungsspezifische Referenzinformation kann beispielsweise beim Aufbau der Netzwerkverbindung aC2 an das Cloud-Backend 200b übermittelt oder durch eine Bereitstellungseinheit 20' des Cloud-Backends 200b bereitgestellt werden. Des Weiteren kann der Datenverkehr auch auf der Firewall FW anhand einer von einem Bereitstellungsmodul 20" bereitgestellten verbindungsspezifischen Referenzinformation geprüft werden. Die verbindungsspezifische Referenzinformation kann beispielsweise abhängig von der Authentisierungsinformation der Sendeeinheit 100 und/oder von einer Identifikationsinformation der Sendeeinheit 100 und/oder von einer verbindungsspezifischen Portnummer der Netzwerkverbindung aC2 und/oder von einem verbindungsspezifischen Protokoll der Netzwerkverbindung aC2 ermittelt werden. Die jeweiligen Bereitstellungsmodule 20, 20', 20" können insbesondere Speichereinheiten sein, die derart eingerichtet sind, mindestens eine verbindungsspezifische Referenzinformation zu speichern und diese für eine Überprüfung durch ein jeweiliges Überprüfungsmodul 10, 10', 10" bereitzustellen. Die Überprüfung des Datenverkehrs und die Zulassung der Netzwerkverbindung aC2 erfolgt durch mindestens eines der Überprüfungsmodule 10, 10', 10". Das Überprüfungsmodul 10 der Sendeeinheit 100 kann zusätzlich den Datenverkehr, der über die kryptographisch authentisierte Netzwerkverbindung aC1 an das Feldgerät 200a übermittelt wird, anhand einer weiteren Referenzinformation, die spezifisch für diese Netzwerkverbindung aC1 bereitgestellt wird, prüfen und diese Netzwerkverbindung aC1 abhängig vom Prüfergebnis zulassen. Wenn der Datenverkehr einer der Netzwerkverbindungen aC1, aC2 von der jeweiligen Referenzinformation abweicht, können insbesondere beide Netzwerkverbindungen unterbrochen und/oder neu authentisiert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Zulassen einer kryptographisch authentisierten Netzwerkverbindung zwischen einer Sendeeinheit (100) und einer Empfangseinheit (200a, 200b), umfassend die Schritte:
- Aufbauen (S1) einer Netzwerkverbindung (aC1, aC2) zwischen der Sendeeinheit (100) und der Empfangseinheit (200a, 200b), wobei die Sendeeinheit für die Netzwerkverbindung mittels einer Authentisierungsinformation kryptographisch authentisiert wird,
- Bereitstellen (S2) einer verbindungsspezifischen Referenzinformation,
- Überprüfen (S3) eines von der Sendeeinheit (100) über die kryptographisch authentisierte Netzwerkverbindung (aC1, aC2) übermittelten Datenverkehrs anhand der verbindungsspezifischen Referenzinformation,
- Zulassen (S4) der kryptographisch authentisierten Netzwerkverbindung (aC1, aC2), wenn der Datenverkehr zumindest teilweise mit der verbindungsspezifischen Referenzinformation übereinstimmt.

2. Computerimplementiertes Verfahren nach Anspruch 1, wobei der über die kryptographisch authentisierte Netzwerkverbindung (aC1, aC2) übermittelte Datenverkehr überprüft wird solange die kryptographisch authentisierte Netzwerkverbindung aufgebaut ist.

3. Computerimplementiertes Verfahren nach Anspruch 1, wobei der über die kryptographisch authentisierte Netzwerkverbindung (aC1, aC2) übermittelte Datenverkehr nach oder bei einer Unterbrechung oder Beendigung der Netzwerkverbindung überprüft wird.

4. Computerimplementiertes Verfahren nach einem der vorhergehenden Ansprüche, wobei, wenn der Datenverkehr von der verbindungsspezifischen Referenzinformation abweicht, mindestens einer der folgenden Schritte durchgeführt wird (S5):
- Unterbrechen oder Beenden der kryptographisch authentisierten Netzwerkverbindung (aC1, aC2),
- Unterbrechen oder Beenden einer weiteren, von der Sendeeinheit ausgehenden Netzwerkverbindung,
- Wiederholen der kryptographischen Authentisierung der Sendeeinheit,
- Speichern des Prüfergebnisses der Überprüfung des Datenverkehrs,
- Löschen von Konfigurationsdaten der Sendeeinheit,
- Löschen einer Authentifizierungsinformation, die der Authentisierungsinformation der Sendeeinheit zugeordnet ist,
- Zurücksetzen einer Datenbank-Transaktion
und/oder
- Durchführen eines Neustarts der Sendeeinheit.

5. Computerimplementiertes Verfahren nach einem der vorhergehenden Ansprüche, wobei die verbindungsspezifische Referenzinformation abhängig von der Authentisierungsinformation der Sendeeinheit und/oder von einer Identifikationsinformation der Sendeeinheit und/oder von einer verbindungsspezifischen Portnummer und/oder von einem verbindungsspezifischen Protokoll und/oder von einer Authentisierungsinformation der Empfangseinheit ermittelt wird.

6. Computerimplementiertes Verfahren nach einem der vorhergehenden Ansprüche, wobei die verbindungsspezifische Referenzinformation aus einer bereitgestellten Vielzahl von Referenzinformationen für die Sendeeinheit in Abhängigkeit von der Authentisierungsinformation der Sendeeinheit und/oder von der Identifikationsinformation der Sendeeinheit und/oder von der verbindungsspezifischen Portnummer und/oder von dem verbindungsspezifischen Protokoll selektiert wird.

7. Computerimplementiertes Verfahren nach einem der vorhergehenden Ansprüche, wobei die verbindungsspezifische Referenzinformation beim Verbindungsaufbau an die Empfangseinheit (200a, 200b) übermittelt wird.

8. Computerimplementiertes Verfahren nach einem der vorhergehenden Ansprüche, wobei die Authentisierungsinformation der Sendeeinheit die verbindungsspezifische Referenzinformation umfasst.

9. Computerimplementiertes Verfahren nach einem der vorhergehenden Ansprüche, wobei die Überprüfung des Datenverkehrs durch ein Überprüfungsmodul (10, 10', 10") durchgeführt wird, wobei das Überprüfungsmodul der Sendeeinheit oder der Empfangseinheit zugeordnet oder separat, zwischen der Sendeeinheit und der Empfangseinheit, angeordnet ist.

10. Computerimplementiertes Verfahren nach einem der vorhergehenden Ansprüche, wobei die Überprüfung des Datenverkehrs anhand der verbindungsspezifischen Referenzinformation kontinuierlich oder zu vorgegebenen Zeitpunkten erfolgt.

11. Überprüfungsmodul (10, 10', 10") zum Zulassen einer kryptographisch authentisierten Netzwerkverbindung (aC1, aC2) zwischen einer Sendeeinheit (100) und einer Empfangseinheit (200a), wobei das Überprüfungsmodul (10, 10', 10") derart eingerichtet ist, einen von der Sendeeinheit (100) über die kryptographisch authentisierte Netzwerkverbindung übermittelten Datenverkehr anhand einer bereitgestellten, verbindungsspezifischen Referenzinformation zu überprüfen und die kryptographisch authentisierte Netzwerkverbindung (aC1, aC2) zuzulassen, wenn der Datenverkehr mit der verbindungsspezifischen Referenzinformation zumindest teilweise übereinstimmt.

12. Sendeeinheit (100) zum Zulassen einer kryptographisch authentisierten Netzwerkverbindung zu einer Empfangseinheit (200a, 200b), umfassend:
- eine Schnittstelle (30), die derart eingerichtet ist, eine Netzwerkverbindung zwischen der Sendeeinheit und der Empfangseinheit aufzubauen, wobei die Sendeeinheit für die Netzwerkverbindung mittels einer Authentisierungsinformation kryptographisch authentisiert ist,
- Bereitstellungsmodul (20), das derart eingerichtet ist, eine verbindungsspezifische Referenzinformation bereitzustellen,
und
- ein Überprüfungsmodul (10) nach Anspruch 11.

13. System (300) zum Zulassen einer kryptographisch authentisierten Netzwerkverbindung zwischen einer Sendeeinheit (100) und einer Empfangseinheit (200a, 200b), umfassend:
- die Sendeeinheit (100), die eine Schnittstelle (30), die derart eingerichtet ist, eine Netzwerkverbindung zwischen der Sendeeinheit und der Empfangseinheit aufzubauen, wobei die Sendeeinheit für die Netzwerkverbindung mittels einer Authentisierungsinformation kryptographisch authentisiert ist, und ein Bereitstellungsmodul (20), das derart eingerichtet ist, eine verbindungsspezifische Referenzinformation bereitzustellen, umfasst,
- die Empfangseinheit (200a, 200b), die derart eingerichtet ist, einen Datenverkehr über die kryptographisch authentisierte Netzwerkverbindung zu empfangen,
und
- ein Überprüfungsmodul (10, 10', 10") nach Anspruch 11, wobei das Überprüfungsmodul der Sendeeinheit oder der Empfangseinheit zugeordnet oder separat, zwischen der Sendeeinheit und der Empfangseinheit angeordnet ist.

14. Computerprogrammprodukt umfassend Programmcodeteile, die bei der Ausführung des Programms durch einen Prozessor diesen veranlassen, die Schritte des Verfahrens nach einem der Ansprüche 1 bis 10 auszuführen.
